# EUROPEAN PATENT APPLICATION

(11) **EP 2 913 644 A2**
(43) Date of publication of application: **02.09.2015**
(21) Application number: 15000493.5
(22) Date of filing: 20.02.2015
(51) Int. Cl.: G01H 7/00

(54) **Portable device for measuring the acoustic reflectivity coefficient in situ**

(30) Priority: 27.02.2014 CZ 20140123
(71) Applicant: Ceské vysoké ucení technické v Praze, 273 43 Bustehrad (CZ)
(72) Inventor: Holub, Jan, 253 01 Hostiveice (CZ)
(74) Representative: Sedlák, Jirí

(57) **Abstract**

Portable device is formed by a standard smartphone (1) equipped with a display (1.8) and with a display processor (1.7) and it further comprises a processor unit (1.1) connected to an audio interface (1.2), the output of which is via a power amplifier (1.3) connected to a speaker (1.4), while the input of the audio interface (1.2) is connected via a microphone pre-amplifier (1.5) to the output of a microphone (1.6). The smartphone (1) is complemented with a control unit (2) formed by a pseudorandom signal generator (2.1) and a generator (2.2) of harmonic pulses sequence with variable frequencies, and these generators are connected to a measuring process timing block (2.3), which is bi-directionally interconnected with the processor unit (1.1). The output of the processor unit (1.1) is via a time records distribution block (2.4) connected both to a block (2.5) of initial calculation of a microphone-to-barrier distance and the overall barrier reflectivity, and also it is connected to a records time alignment block (2.6). The first output of the block (2.5) of initial calculation of the microphone-to-barrier distance and the overall barrier reflectivity is via the records time alignment block (2.6) and via the block (2.8) of the reflectivity coefficient calculation for individual frequencies connected to the first input of the display processor (1.7) of the display (1.8). To the second input of the display processor (1.7) of the display (1.8) is connected the second output of the block (2.5) of initial calculation of the microphone-to-barrier distance and the overall barrier reflectivity.

## Description

### Background of the Invention

The present invention relates to a portable device designed to measure the coefficient of the acoustic reflectivity from various surfaces in situ, especially in the civil engineering industry.

### Description of Prior Art

At present, the surface reflectivity coefficient is measured in compliance with valid standards using several methods. These measurements can be divided into three groups.

The first group includes measurements performed in laboratory and focused on testing a specially processed sample of the measured material inserted into so-called Kundt tube. These measurements are based on the following standards:
ASTM Standard C384-04, 2003, Standard Test Method for Impedance and Absorption of Acoustical Materials by the Impedance Tube Method, ASTM International, 2003, DOI: 10.15201C0384-04R11.
ASTM Standard E1050, 2012, Standard Test Method for Impedance and Absorption of Acoustical Materials Using a Tube, Two Microphones, and a Digital Frequency Analysis System, ASTM International, York, PA USA, 2012, DOI: 10.1520/E1050-12.
ISO 10534, Determination of sound absorption coefficient and impedance in impedance tubes, International Organisation for Standardization, Case postale 56, CH-1211 Genève 20, (1998).

The second group consists of laboratory measurements performed in an anechoic chamber or reverberation measurement chamber and these are defined by the standard ASTM Standard C423, 2009a, Standard Test Method for Sound Absorption and Sound Absorption Coefficients by the Reverberation Room Method, ASTM International, York, PA USA, 2009, DOI: 10.1520/C0423-09A.

The third group includes operational measurements performed by the measuring apparatus in situ, for example according to the standard ISO 13472-1, AcousticsMeasurement of sound absorption properties of road surfaces in situ -- Part 1: Extended surface method, 2002, CS: 17.140.30; 93.080.20, TC/SC: ISO/TC 43/SC 1. This kind of measurement requires a measuring speaker - so-called talkbox - and a recording device, it means an audio recorder with measuring microphone. Talkbox is a box equipped with speakers and powered by power amplifier that amplifies the measuring signal generated e.g. from a CD player. Recording device is e.g. a sound card in portable PC or a dedicated audio recorder. Recorded signals are then processed by suitable software, which compares the calculated energy of the impacting and reflected waves.

The disadvantage of the currently known devices for measuring the acoustic reflectivity coefficient for the first two groups is that these are in vitro methods and therefore inapplicable for the in situ measuring, for instance to measure fixed installed anti-noise barriers or walls. The third group of methods is designed for measuring in situ, it however requires to use a dedicated measuring apparatus. Such required measuring set is only hardly portable, typically the apparatus must be transported by car. Also, its purchase costs are high.

### Summary of the Invention

The disadvantages mentioned above are removed by a portable device for measuring the acoustic reflectivity coefficient in situ according to the presented invention. Its principle is that it is formed by a standard smartphone with a display and the display processor and it further contains a processor unit connected to the audio interface with a speaker plus sound amplifier and with a microphone plus microphone amplifier. The smartphone is complemented with a control unit. This control unit is formed by the pseudorandom signal generator and the harmonic pulses sequence generator with variable frequencies, for example ranging from 125 Hz to 8 kHz, where these generators are connected to the measuring process timing block. The measuring process timing block is bi-directionally interconnected with the processor unit. Via the time records distribution block the control unit output is interconnected with both the block of the initial calculation of the microphone-to-barrier distance and the overall barrier reflectivity, and also it is interconnected with the records time alignment block. The first output of the block of initial calculation of the microphone-to-barrier distance and the overall barrier reflectivity is via the records time alignment block interconnected with the input of the block of the reflectivity coefficient calculation for individual frequencies. Output of this block of the reflectivity coefficient calculation for individual frequencies is connected to the first input of the display processor. The second output of the block of initial calculation of the microphone-to-barrier distance and the overall barrier reflectivity is connected to the second input of the display processor.

If both the speaker and microphone being part of the smartphone are used, the output of the records time alignment block is connected to the input of the block of the reflectivity coefficient calculation for individual frequencies via the time records deduction block.

Apart from the case when the microphone and speaker are a part of the smartphone, another embodiment is possible when the speaker or the microphone will be located outside the smartphone. This second option is however mentioned rather as an option because for such application the microphone will have to be specially built. With the external speaker no such issue exists since there are widely available speakers on the market equipped with a cable allowing them to connect externally to a smartphone via the headphones jack.

The advantage of the presented invention is that it features a low-cost and space-saving design and the solution is highly mobile. Using the device is simple and therefore even non-professionals can carry out the measurements after passing a brief training.

### Explanation of Drawings

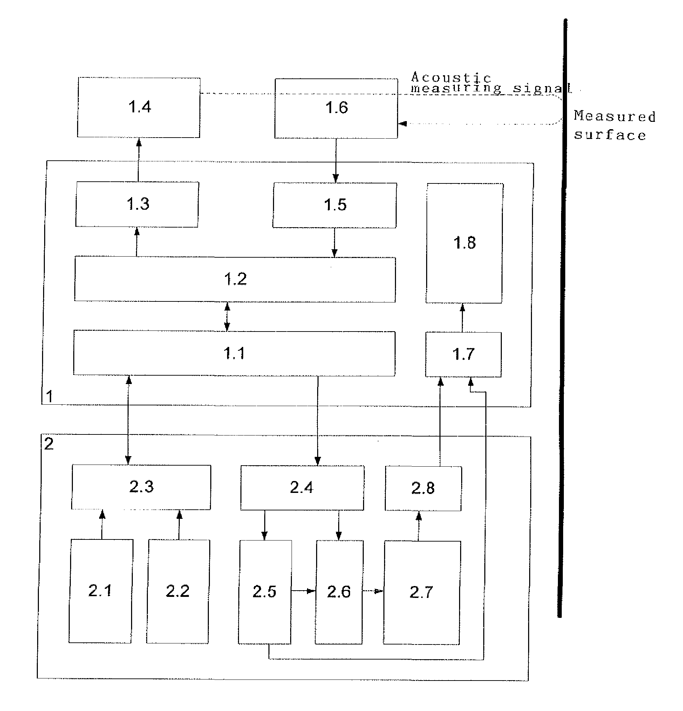

Portable device for measuring the acoustic reflectivity coefficient in situ according to the presented solution is schematically shown in the attached drawing.

### Detailed Description of the Preferred Embodiments

Preferred embodiment of the portable device for measuring the acoustic reflectivity coefficient will be further described with the help of the attached schematic block diagram in the drawing.

The device for measuring the acoustic reflectivity of surfaces is formed by so-called smartphone 1, in which the following blocks are exploited: the processor unit 1.1, audio interface 1.2 of the smartphone, power amplifier 1.3 of the speaker 1.4 and microphone pre-amplifier 1.5 for the microphone 1.6.

Such standard smartphone 1 is further complemented with a control unit 2. The control unit 2 is formed by the pseudorandom signal generator 2.1 and the generator 2.2 of the harmonic pulses sequence with variable frequencies that are both connected to the measuring process timing block 2.3, which is bi-directionally interconnected with the processor unit 1.1. Via the time records distribution block 2.4 the processor unit 1.1 output is interconnected with both the block 2.5 of the initial calculation of the microphone-to-barrier distance and the overall barrier reflectivity, and also it is interconnected with the records time alignment block 2.6. The first output of the block 2.5 of initial calculation of the microphone-to-barrier distance and the overall barrier reflectivity, which is the output used for the distance calculation, is in the given example connected via the records time alignment block 2.6 to the input of the time records deduction block 2.7. The output of the time records deduction block 2.7 is then connected via the block 2.8 of the reflectivity coefficient calculation for individual frequencies to the first input of the processor 1.7 of the display 1.8 where this first input is the input of the initial result. To the second input of the processor 1.7 of the display 1.8, which is the input of the final result, is connected the second output of the block 2.5 of initial calculation of the microphone-to-barrier distance and the overall barrier reflectivity, which is the output for displaying the result.

The given example allows the possibility of using both the built-in speaker 1.4 and the microphone 1.6. Such case requires to use in the algorithm the method of deducting the reference and reflected signals in the optional time records deduction block 2.7. There is however an option when the connector built in the smartphone 1, usually the 3.5 mm jack, is used for connection to the external speaker 1.4 and uses its own built-in microphone 1.6, or it can be connected to the external microphone 1.6 and use its own speaker 1.5.

When the measurement starts the measuring process timing block 2.3 sends the signal from the pseudorandom signal generator 2.1, the so-called MLS, via the audio interface 1.2 of the smartphone 1 and the power amplifier 1.3 to the speaker 1.4 where it is converted into acoustic signal. Both its direct wave and the wave reflected from the measured surface are captured by the microphone 1.6. These are amplified by the microphone pre-amplifier 1.5 at the audio interface 1.2 of the smartphone 1 and then converted to a digital signal, which is via the processor unit 1.1 and the time records distribution block 2.4 brought to the block 2.5 of initial calculation of the microphone-to-barrier distance and the overall barrier reflectivity of the surface. In the block 2.5 of initial calculation of the microphone-to-barrier distance and the overall barrier reflectivity of the surface is calculated the autocorrelation function of the time record and the time coordinate of its second maximum is sent to the records time alignment block 2.6 for future processing. Here is also calculated the ratio of magnitudes of the second and the first maximums of the autocorrelation function and this value is sent to the display processor 1.7, which displays it on the display 1.8 of the smartphone 1 as the first, initial result.

In the second step, the measuring process timing block 2.3 sends a signal from the generator 2.2 of the harmonic pulses sequence with variable frequencies, while the signal contains the harmonic pulses sequence, via the audio interface 1.2 of the smartphone 1 and the power amplifier 1.3 to the speaker 1.4 where it is converted to the acoustic signal. Both its direct wave and the wave reflected from the measured surface are captured by the microphone 1.6. Both these waves are amplified by the microphone pre-amplifier 1.5 in the audio interface 1.2 of the smartphone 1 and then converted to a digital signal, which is via the processor unit 1.1 and the time records distribution block 2.4 brought to the records time alignment block 2.6 where the start times, or end times respectively, of individual harmonic marks are identified using the previously obtained initial measurements of the microphone-to-barrier distance by means of the second maximum of the autocorrelation function of the pseudorandom reflected signal, see previous paragraph. Time-aligned records are then sent to the time records deduction block 2.7, where the direct signal can be deducted from the reflected signal to improve the resulting accuracy. This block is mandatory in case when both the speaker and microphone built in the smartphone are used. From the time records deduction block 2.7 the signal is sent to the block 2.8 of the reflectivity coefficient calculation for individual frequencies where these coefficients are calculated as a ratio of powers of reflected and directly impacting harmonic pulses, including the measurement uncertainty. Resulting values of these coefficients and their measurement uncertainties are sent to the display processor 1.7, which provides their displaying, in numerical or graphic form, on the display 1.8 of the smartphone 1.

If the external speaker 1.4 is used, the measuring process takes the following steps. The smartphone 1 is placed roughly 1 m from the vertical measured surface and the external speaker 1.4 connected to it is placed roughly in the distance of 1.5 m from the measured surface behind the smartphone 1. When the measurement starts, a short pseudorandom noise, so-called MLS - Maximum Length Sequence, is sent from the external speaker 1.4 with duration for example 4 ms and its direct and reflected levels are recorded. Calculation, applying the autocorrelation function on the record, is used to determine the exact distance of the microphone 1.6 from the measured surface. Ratio of magnitudes of the autocorrelation function first two maximums allows to determine the mean broadband reflection coefficient. Then a sequence of short harmonic pulses, again for example 4 ms long, covering the measured frequency range, for instance 125-8000 Hz, is sent; these pulses are generated by the generator 2.2 of the harmonic pulses sequence with variable frequencies. Calculation in the block 2.8 of the reflectivity coefficient calculation for individual frequencies determines the ratio of powers of direct and reflected waves for individual frequencies and thus also the frequency dependence of the measured surface reflectivity coefficient is determined.

If the external microphone 1.6 is used, this microphone 1.6 is placed roughly in the distance of 1 m from the vertical measured surface and the smartphone 1, to which this microphone is connected, is placed roughly in the distance of 1.5 m from the measured surface behind the microphone 1.6.

Reflections of the measured signal from other surfaces, such as the floor or ceiling, are prevented by placing the microphone 1.6 in a position where the distances of these spurious reflective surfaces from the microphone 1.6 are greater than the distance from the measured surface. Comparing the measured frequency dependence of the reflectivity coefficient with table or model data values allows to estimate the measured surface structure, for example the thickness of thermal insulation on perimeter wall.

### Industrial Applicability

The main application sphere is the construction acoustics for measuring the acoustic properties of building materials such as walls, plasters, lining, and insulation materials, for example insulation lining, screens and barrier materials. Derived applications include preview measurements for the rooms acoustic designs, or noise absorption designs respectively, indirect sanitary measurements such as measurements of sound barriers, or forensic measurements such as non-destructive analysis of composition of insulating layers under plaster.

## Claims

1. A portable device for measuring the acoustic reflectivity coefficient in situ **characterized in that** it is formed by a standard smartphone (1) equipped with a display (1.8) and a display processor (1.7) and the smartphone comprises a processor unit (1.1) connected to an audio interface (1.2), the output of which is via a power amplifier (1.3) connected to a speaker (1.4), while the input of the audio interface (1.2) is connected via a microphone pre-amplifier (1.5) to the output of a microphone (1.6), where this smartphone (1) is complemented with a control unit (2) formed by a pseudorandom signal generator (2.1) and a generator (2.2) of harmonic pulses sequence with variable frequencies, and these generators are connected to a measuring process timing block (2.3), which is bi-directionally interconnected with the processor unit (1.1), the output of which is via a time records distribution block (2.4) connected both to a block (2.5) of initial calculation of the microphone-to-barrier distance and the overall barrier reflectivity, and also it is connected to a records time alignment block (2.6), where the first output of the block (2.5) of initial calculation of the microphone-to-barrier distance and the overall barrier reflectivity is via the records time alignment block (2.6) and via a block (2.8) of the reflectivity coefficient calculation for individual frequencies connected to the first input of the display processor (1.7) of the display (1.8), while to its second input is connected the second output of the block (2.5) of initial calculation of the microphone-to-barrier distance and the overall barrier reflectivity.

2. Portable device according to claim 1 **characterized in that** both the speaker (1.4) and the microphone (1.6) are a part of the smartphone (1) and the output of the records time alignment block (2.6) is connected to the input of the block (2.8) of the reflectivity coefficient calculation for individual frequencies via a time records deduction block (2.7).

3. Portable device according to claim 1 **characterized in that** the speaker (1.4) is located outside the smartphone (1).

4. Portable device according to claim 1 **characterized in that** the microphone (1.6) is located outside the smartphone (1).
